# EUROPÄISCHE PATENTSCHRIFT

(11) **EP 4 189 266 B1**
(45) Veröffentlichungstag und Bekanntmachung des Hinweises auf die Patenterteilung: **28.05.2025**
(21) Anmeldenummer: 21737598.9
(22) Anmeldetag: 28.06.2021
(51) Int. Cl.: F16H 57/08, F03D 15/00, F16D 1/10, F16D 1/108, F16H 1/46

(54) **INTEGRIERTE BAUWEISE EINER SONNENWELLE**
INTEGRATED DESIGN OF A SUN SHAFT
CONCEPTION INTÉGRÉE D'UN ARBRE SOLAIRE

(30) Priorität: 31.07.2020 DE 102020209679
(43) Veröffentlichungstag der Anmeldung: 07.06.2023
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, 3040 Huldenberg (BE)
(74) Vertreter: ZF Friedrichshafen AG
(86) Internationale Anmeldenummer: PCT/EP2021/067600
(87) Internationale Veröffentlichungsnummer: WO 2022/022919

(56) Entgegenhaltungen:
- DE-A1- 102018 206 103
- US-A- 4 020 716

## Beschreibung

Die Erfindung betrifft ein Windkraftgetriebe nach dem Oberbegriff von Anspruch 1.

Aus dem Stand der Technik sind Windkraftgetriebe mit zwei Planetenstufen bekannt.

Eine erste Planetenstufe weist ein drehbares Sonnenrad auf, das einstückig mit einer Sonnenwelle verbunden ist. Die Sonnenwelle treibt über eine Passverzahnung einen drehbar gelagerten Planetenträger einer zweiten Planetenstufe an.

Aus der DE 10 2018 206103 A1 ist ein Windkraftgetriebe bekannt, welches unter den Wortlaut des Oberbegriffs des Anspruchs 1 fällt.

US 4 020 716 A offenbart einen Achsantrieb für Landfahrzeuge mit einem Planetengetriebe. Zwei Planetenradsätze sind dabei derart in Reihe angeordnet, dass ein erster Planetenradsatz ein auf einer Antriebswelle angeordnetes Sonnenrad und einen Planetenträger aufweist, der in einer stationären Nabe angeordnet ist. Ein Hohlrad des ersten Planetenradsatzes ist in der Nabe fixiert. Ein zweiter Planetenradsatz umfasst ein Sonnenrad, das von einem Ausleger des Planetenträgers des ersten Planetenradsatzes gestützt wird.

Der Erfindung liegt die Aufgabe zugrunde, ein Windkraftgetriebe mit zwei Planetenstufen zu verbessern. Diese Aufgabe wird gelöst durch ein Windkraftgetriebe nach Anspruch 1.

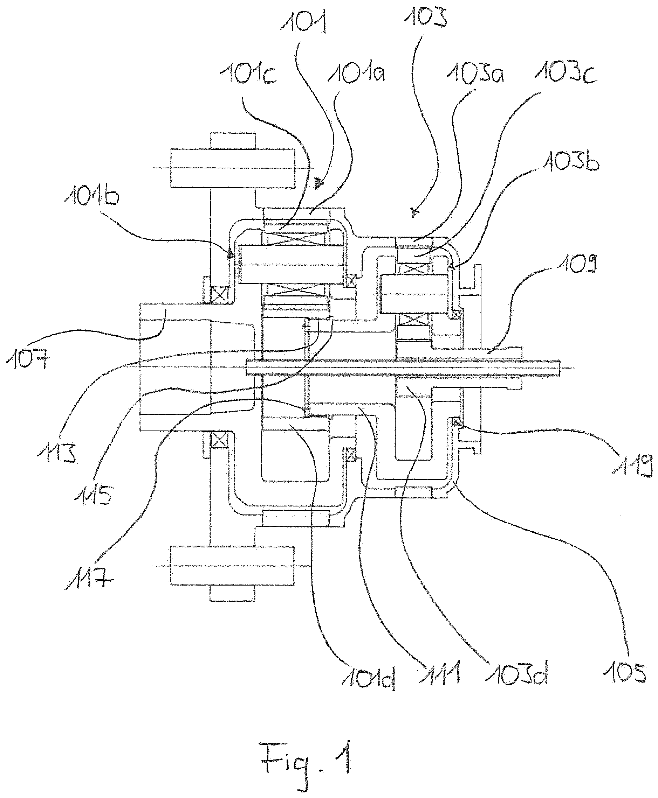

Bevorzugte Weiterbildungen sind in den Unteransprüchen enthalten und ergeben sich aus nachfolgender Beschreibung sowie dem in Fig. 1 dargestellten Ausführungsbeispiel.

Das Windkraftgetriebe umfasst eine erste Planetenstufe und eine zweite Planetenstufe. Eine Planetenstufe ist eine Getriebestufe mit einem Hohlrad, einem Sonnenrad, einem Planetenträger und einem oder mehreren Planetenrädern. Die Planetenräder sind drehbar in dem Planetenträger gelagert. Sie kämmen jeweils mit dem Sonnenrad und/oder dem Hohlrad. Mindestens zwei der drei Komponenten Hohlrad, Planetenträger und Sonnenrad sind unabhängig voneinander um eine gemeinsame Drehachse drehbar gelagert. Die dritte Komponente ist bevorzugt gehäusefest angeordnet. Insbesondere kann das Hohlrad gehäusefest angeordnet sein, während der Planetenträger und das Sonnenrad drehbar gelagert sind.

Das Sonnenrad der ersten Planetenstufe und der Planetenträger der zweiten Planetenstufe sind mittels einer Passverzahnung drehfest miteinander verbunden. Im Einzelnen sind das Sonnenrad und der Planetenträger um eine gemeinsame Drehachse drehbar gelagert. Durch die Passverzahnung wird dabei eine Verdrehung des Sonnenrads und des Planetenträgers relativ zueinander unterbunden. Insbesondere lässt sich über die Passverzahnung ein Drehmoment von dem Sonnenrad auf den Planetenträger übertragen.

Eine Passverzahnung, auch Steckverzahnung genannt, besteht aus einer Innenverzahnung und einer Außenverzahnung. Die Innenverzahnung und die Außenverzahnung sind koaxial zueinander angeordnet, das heißt sie weisen eine gemeinsame Mittel- und Drehachse auf. Die Innenverzahnung und die Außenverzahnung greifen ineinander, sodass eine formschlüssige drehfeste Verbindung zwischen beiden Verzahnungen zustande kommt.

Das Sonnenrad bildet einstückig die Innenverzahnung aus. Das Sonnenrad und die Innenverzahnung sind insbesondere einstückig miteinander verbunden.

Die Außenverzahnung wird einstückig durch eine erste Wange des Planetenträgers oder einstückig durch eine einstückig mit der ersten Wange verbundene Sonnenwelle ausgebildet. Die erste Wange, die Außenverzahnung und gegebenenfalls die Sonnenwelle sind also einstückig miteinander verbunden. Der Planetenträger bildet die Außenverzahnung einstückig aus. Die Außenverzahnung und der gesamte Planetenträger bestehen aus aus einem Stück. Eine Wange eines Planetenträgers ist eine Stützstruktur, die Bolzensitze ausbildet. Ein Bolzensitz wiederum ist ein Mittel zum Fixieren eines Planetenbolzens. Die Planetenbolzen dienen der Aufnahme und Lagerung jeweils eines Planetenrads. Die Wange zeichnet sich dadurch aus, dass sie axial zu den Planetenrädern der jeweiligen Planetenstufe versetzt ist. Die Wange und die Planetenräder befinden sich also auf unterschiedlichen Seiten einer zwischen der Wange und den Planetenrädern verlaufenden radial, das heißt, orthogonal zu einer Drehachse der mindestens zwei drehbaren Komponenten der Planetenstufe ausgerichteten Ebene.

Die Außenverzahnung greift in die Innenverzahnung ein. Dabei ist die Außenverzahnung innerhalb der Innenverzahnung angeordnet. Entsprechend hat die Innenverzahnung einen größeren Durchmesser als die Außenverzahnung. Dies wiederum ermöglicht es, das Sonnenrad und/oder eine Sonnenwelle mit einem größeren Durchmesser zu verwenden. Dadurch sinken die aufgrund des zu übertragenden Drehmoments zu bewältigenden Spannungen. Dies verschafft zusätzliche Freiheiten bei der Auslegung des Getriebes. So ist es etwa möglich, größere Drehmomente zu übertragen und/oder die Sonnenwelle aus einem zwar weniger belastbaren, dafür aber günstigeren Material herzustellen. Dabei kann aufgrund der Passverzahnung dennoch ein Sonnenrad verwendet werden, das aus einem höherfesten Material besteht. Durch die einstückige Ausführung der ersten Wange und der Sonnenwelle verringert sich der Platzbedarf der Anordnung in axialer Richtung.

In einer bevorzugten Weiterbildung besteht ein axialer Überlapp zwischen einer Arbeitsverzahnung des Sonnenrads und der Passverzahnung. Die Arbeitsverzahnung zeichnet sich dadurch aus, dass sie mit den Verzahnungen eines oder mehrerer Planetenräder der ersten Stufe kämmt. Ein axialer Überlapp bedeutet, dass mindestens ein Teil der Arbeitsverzahnung und mindestens ein Teil der Passverzahnung, insbesondere mindestens ein Teil der Innenverzahnung und mindestens ein Teil der Außenverzahnung, zwischen zwei radial, das heißt orthogonal zu der oben genannten Drehachse ausgerichteten Ebenen liegt, wobei die Ebenen jeweils sämtliche genannten Verzahnungen tangieren oder schneiden. Der axiale Überlapp zwischen der Arbeitsverzahnung und der Passverzahnung ermöglicht die Ausbildung einstückig mit der ersten Wange und/oder dem Planetenträger verbundenen Sonnenwelle.

Bevorzugt ist die Sonnenwelle als Gussteil weitergebildet. Dies ist von Vorteil, da Gussteile kostengünstig herstellbar sind.

Die Sonnenwelle weist in einer darüber hinaus bevorzugten Weiterbildung einen Absatz auf, der ein erstes axiales Widerlager gegenüber dem Sonnenrad bildet. Der Absatz steht also mit dem Sonnenrad in Kontakt und verhindert eine Verschiebung der Sonnenwelle und des Sonnenrads relativ zueinander in eine erste axiale Richtung.

Ein zweites axiales Widerlager wird in einer bevorzugten Weiterbildung durch einen Ring gebildet, der mit der Sonnenwelle gefügt ist. Insbesondere kann der Ring mit der Sonnenwelle verschraubt sein. Der Ring steht mit dem Sonnenrad in Kontakt und verhindert eine Verschiebung der Sonnenwelle und des Sonnenrads relativ zueinander in eine zweite, zu der ersten axialen Richtung entgegengesetzt verlaufende Richtung.

Erfindungsgemäß ist das Windkraftgetriebe mit einer Lageranordnung ausgebildet. Diese dient der Lagerung des Planetenträgers. Der Planetenträger ist dabei ausschließlich mittels der Lageranordnung gelagert. Weiterhin ist die Lageranordnung ausschließlich mit einer zweiten Wange des Planetenträgers gefügt. Insbesondere ist die Lageranordnung nicht mit der ersten Wange gefügt.

Die Fügeverbindung zwischen der ersten Lageranordnung und der zweiten Wange gestaltet sich bevorzugt derart, dass ein oder mehrere Außenringe von Lagern der Lageranordnung oder ein oder mehrere Innenringe der Lager in der zweiten Wange fixiert sind.

Die erste Wange kann freischwebend ausgeführt sein. Bevorzugt stützt sich die erste Wange aber über die Sonnenwelle und die Passverzahnung in dem Planetenträger der ersten Planetenstufe ab.

Ein bevorzugtes Ausführungsbeispiel der Erfindung ist in Fig. 1 dargestellt. Im Einzelnen zeigt:
Fig. 1 ein Windkraftgetriebe.

Bei dem in Fig. 1 dargestellten Getriebe handelt es sich um ein Planetengetriebe mit einer ersten Planetenstufe 101 und einer zweiten Planetenstufe 103. Beide Planetenstufen 101, 103 umfassen jeweils ein Hohlrad 101a, 103a, einen Planetenträger 101b, 103b, Planetenräder 101c, 103c und ein Sonnenrad 101d, 103d. Die Planetenräder 101c, 103d kämmen mit dem jeweiligen Hohlrad 101a, 103a und dem jeweiligen Sonnenrad 101d, 103. Die Planetenträger 101b, 103b sind jeweils drehbar in einem Getriebegehäuse 105 gelagert.

Der Planetenträger 101b der ersten Planetenstufe 101 bildet einstückig eine Eingangswelle 107 des Getriebes aus. Eine Ausgangswelle 109 des Getriebes ist einstückig mit dem Sonnenrad 103d der zweiten Planetenstufe 103 verbunden. Ein über die Eingangswelle 107 in das Getriebe eingeleitetes Drehmoment wird über die erste Planetenstufe 101 und die zweite Planetenstufe 103 an die Ausgangswelle 109 weitergeleitet.

Als drehmomentleitende Verbindung zwischen den beiden Planetenstufen 101, 103 dient eine Sonnenwelle 111. Diese verbindet das Sonnenrad 101d der ersten Planetenstufe 101 drehfest mit dem Planetenträger 103b der zweiten Planetenstufe 103. Die Sonnenwelle 111 ist einstückig mit dem Planetenträger 103b der zweiten Planetenstufe 103 verbunden. Eine Passverzahnung 113 stellt eine drehfeste Verbindung zwischen der Sonnenwelle 111 und dem Sonnenrad 101d der ersten Planetenstufe 101 her. Die Passverzahnung 113 befindet sich im Inneren des Sonnenrads 101d der ersten Planetenstufe 101 und wird von dem Sonnenrad 101d tangential in Umfangsrichtung umschlossen.

Die Sonnenwelle 111 bildet einen Steg 115 aus. Dieser liegt an dem Sonnenrad 101d der ersten Planetenstufe 101 an und verhindert so eine Verschiebung der Sonnenwelle 111 in eine erste axiale Richtung.

Eine ringförmige Scheibe 117 ist stirnseitig mit der Sonnenwelle 111 verschraubt. Die Scheibe 117 liegt an einem entsprechenden Absatz des Sonnenrads 101d der ersten Planetenstufe 101 an. Dadurch wird eine Verschiebung der Sonnenwelle 111 relativ zu dem Sonnenrad 101d der ersten Planetenstufe 101 in eine zweite axiale Richtung entgegengesetzt zu der ersten axialen Richtung verhindert.

Durch den Steg 115 und die Scheibe 117 sind das Sonnenrad 101d der ersten Planetenstufe 101 und die Sonnenwelle 111 somit relativ zueinander gegenüber Verschiebungen in axialer Richtung fixiert. Geringfügige Verkippungen des Sonnenrads 101d der ersten Planetenstufe 101 und der Sonnenwelle 111 um radiale, das heißt orthogonal zu einer gemeinsamen Drehachse des Sonnenrads 101d der ersten Planetenstufe 101 und der Sonnenwelle 111 verlaufende Drehachsen werden hingegen durch die Passverzahnung 113 ermöglicht. Dadurch lassen sich insbesondere lastbedingte Lageabweichungen ausgleichen und damit verbundene Fehlbelastungen vermeiden.

Der Planetenträger 103b der zweiten Planetenstufe 103 ist mittels eines einzigen, generatorseitig angeordneten Lagers 119 gelagert. Das Lager 119 ist ausgehend von den Planetenrädern 103c der zweiten Planetenstufe 103 generatorseitig angeordnet. Rotorseitig des Lagers 119 befindet sich kein weiteres Lager, mit dem der Planetenträger 103b der zweiten Planetenstufe 103 gelagert ist. Stattdessen stützt sich der Planetenträger 103b der zweiten Planetenstufe 103 über die Sonnenwelle 111 in dem Sonnenrad 101d der ersten Planetenstufe 101 ab.

### Bezugszeichen

- 101: erste Planetenstufe
- 101a: Hohlrad
- 101b: Planetenträger
- 101c: Planetenrad
- 101d: Sonnenrad
- 103: zweite Planetenstufe
- 103a: Hohlrad
- 103b: Planetenträger
- 103c: Planetenrad
- 103d: Sonnenrad
- 105: Getriebegehäuse
- 107: Eingangswelle
- 109: Ausgangswelle
- 111: Sonnenwelle
- 113: Passverzahnung
- 115: Steg
- 117: Scheibe
- 119: Lager

## Patentansprüche

1. Windkraftgetriebe mit einer ersten Planetenstufe (101) und einer zweiten Planetenstufe (103); wobei
ein Sonnenrad (101d) der ersten Planetenstufe (101) und ein Planetenträger (103b) der zweiten Planetenstufe (103) mittels einer Passverzahnung (113) drehfest miteinander verbunden sind; wobei
das Sonnenrad (101d) einstückig eine Innenverzahnung ausbildet; wobei
eine erste Wange des Planetenträgers (103b) oder eine einstückig mit der ersten Wange verbundene Sonnenwelle (111) einstückig eine Außenverzahnung der Passverzahnung (113) ausbildet; und wobei
die Außenverzahnung und der gesamte Planetenträger (103b) aus einem Stück bestehen; **dadurch gekennzeichnet, dass**
der Planetenträger (103b) mittels genau einer Lageranordnung (119) gelagert ist, die ausschließlich mit einer zweiten Wange des Planetenträgers (103b) gefügt ist.

2. Windkraftgetriebe nach Anspruch 1; **gekennzeichnet durch**
einen axialen Überlapp zwischen einer Arbeitsverzahnung des Sonnenrads (101d) und der Passverzahnung (113).

3. Windkraftgetriebe nach einem der vorhergehenden Ansprüche; **dadurch gekennzeichnet, dass**
die Sonnenwelle (111) gegossen ist.

4. Windkraftgetriebe nach einem der vorhergehenden Ansprüche; **dadurch gekennzeichnet, dass**
die Sonnenwelle (111) einen Absatz (115) aufweist, der ein erstes axiales Widerlager gegenüber dem Sonnenrad (101d) bildet.

5. Windkraftgetriebe nach dem vorhergehenden Anspruch; **gekennzeichnet durch** einen Ring (117), der mit der Sonnenwelle (111) gefügt ist und ein zweites axiales Widerlager gegenüber dem Sonnenrad (101d) bildet.

## Claims

1. Wind-turbine transmission having a first planetary stage (101) and having a second planetary stage (103); wherein
a sun gear (101d) of the first planetary stage (101) and a planet carrier (103b) of the second planetary stage (103) are connected to one another in a rotationally conjoint manner by means of a spline toothing (113); wherein
the sun gear (101d) forms an inner toothing in one piece; wherein
a first side piece of the planet carrier (103b) or a sun shaft (111) connected in one piece to the first side piece forms an outer toothing of the spline toothing (113) in one piece; and wherein
the outer toothing and the entire planet carrier (103b) consist of one piece; **characterized in that**
the planet carrier (103b) is mounted by means of precisely one bearing arrangement (119), which is joined exclusively to a second side piece of the planet carrier (103b) .

2. Wind-turbine transmission according to Claim 1; **characterized by**
an axial overlap between a working toothing of the sun gear (101d) and the spline toothing (113).

3. Wind-turbine transmission according to either of the preceding claims; **characterized in that**
the sun shaft (111) is cast.

4. Wind-turbine transmission according to one of the preceding claims; **characterized in that**
the sun shaft (111) has a shoulder (115) which forms a first axial abutment with respect to the sun gear (101d).

5. Wind-turbine transmission according to the preceding claim; **characterized by**
a ring (117) which is joined to the sun shaft (111) and forms a second axial abutment with respect to the sun gear (101d).

## Revendications

1. Transmission d'éolienne comprenant un premier étage planétaire (101) et un deuxième étage planétaire (103) ; une roue solaire (101d) du premier étage planétaire (101) et un porte-planétaire (103b) du deuxième étage planétaire (103) étant reliés entre eux de manière solidaire en rotation au moyen d'une denture de liaison (113) ;
la roue solaire (101d) forme d'un seul tenant une denture intérieure ;
une première joue du porte-planétaire (103b) ou un arbre solaire (111) relié d'un seul tenant à la première joue forme d'un seul tenant une denture extérieure de la denture de liaison (113) ; et
la denture extérieure et l'ensemble du porte-planétaire (103b) sont constitués en une seule pièce ; **caractérisé en ce que**
le porte-planétaire (103b) est monté au moyen d'un seul agencement de palier (119) qui est assemblé exclusivement avec une deuxième joue du porte-planétaire (103b).

2. Transmission d'éolienne selon la revendication 1 ; **caractérisée par**
un chevauchement axial entre une denture de travail de la roue solaire (101d) et la denture de liaison (113).

3. Transmission d'éolienne selon l'une des revendications précédentes ; **caractérisée en ce que** l'arbre solaire (111) est moulé.

4. Transmission d'éolienne selon l'une des revendications précédentes ; **caractérisée en ce que**
l'arbre solaire (111) comprend un épaulement (115) qui forme une première butée axiale par rapport à la roue solaire (101d).

5. Transmission d'éolienne selon la revendication précédente, **caractérisée par**
une bague (117) qui est assemblée avec l'arbre solaire (111) et forme une deuxième butée axiale par rapport à la roue solaire (101d).
